# Europäisches Patentamt
## European Patent Office
### Office européen des brevets

(19)

(11) Publication number: **0 020 364**
**B1**

(12) **EUROPEAN PATENT SPECIFICATION**

(45) Date of publication of patent specification: **23.02.83**

(21) Application number: **79900947.7**

(22) Date of filing: **26.12.78**

(86) International application number:
**PCT/US78/00243**

(87) International publication number:
**WO 80/01405 10.07.80 Gazette 80/15**

(51) Int. Cl.³: **F 16 J 15/32**

(54) SEAL AND SEAL ASSEMBLY.

(43) Date of publication of application:
**07.01.81 Bulletin 81/1**

(45) Publication of the grant of the patent:
**23.02.83 Bulletin 83/8**

(84) Designated Contracting States:
**DE FR GB**

(56) References cited:
**DE - B - 2 708 137**
**FR - A - 1 139 430**
**FR - A - 1 531 683**
**GB - A - 1 025 884**
**GB - A - 1 296 020**
**US - A - 2 966 376**
**US - A - 3 006 701**
**US - A - 3 306 683**
**US - A - 3 447 848**
**US - A - 3 542 392**
**US - A - 3 639 016**
**US - A - 3 658 395**
**US - A - 3 717 394**
**US - A - 3 787 098**

(73) Proprietor: **Towmotor Corporation**
**7111, Tyler Boulevard**
**Mentor Ohio 44060 (US)**

(72) Inventor: **Povejsil, James H.**
**9047 Idlewood Drive**
**Mentor, OH 44060 (US)**

(74) Representative: **Jackson, Peter Arthur et al,**
**GILL JENNINGS & EVERY 53 to 64, Chancery**
**Lane**
**London WC2A 1HN (GB)**

(56) References cited:
**US - A - 3 841 723**
**US - A - 3 858 950**
**US - A - 4 043 620**
**US - A - 4 134 596**
**US - A - 4 141 562**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

Seal and seal assembly

The invention relates to a bearing seal assembly in which it is desirable to block passage of foreign matter in one direction but to permit deflection of the seal in another direction particularly to allow overfilling a bearing with lubricant to clean the bearing.

For example, a steering assembly for a work vehicle commonly includes an axle or frame mounted king pin about which a steering knuckle is rotatable. Rotation of the steering knuckle provides corresponding rotation of a spindle to controllably turn a wheel of the vehicle attached thereto. The steering knuckle is supported about the king pin by a bearing which must be protected and periodically lubricated to ensure proper performance of the steering assembly.

The bearing is exposed to the environment of the work vehicle through an opening located between the steering knuckle and axle owing to the relative rotation of the two components. Heretofore, a seal having two lips or legs and being connected to the steering knuckle has been used. The two lips contact or seal against a surface on the frame or axle to block passage of foreign matter to the bearing. However, when lubricant is subsequently injected into the bearing said seal also blocks passage of the lubricant out of the bearing. In situations where the bearing is overfilled, such as to drive old lubricant from the bearing, this can cause damage to the seal or improper performance of the steering assembly. The result is a waste of time and labour owing to the reduced performance of the steering assembly or downtime in replacing the seal.

DE—B—27 08 137 discloses a bearing seal assembly comprising first and second members which are rotatably mounted relatively to one another by means of an interposed bearing and which define therebetween an annular opening leading from the bearing to the exterior, the opening being bounded on one side by first and second annular surfaces of the first member with the first surface extending away from the bearing and the second surface extending from the end of the first surface remote from the bearing substantially perpendicular to the first surface so as to face towards the bearing; and an annular seal in the opening for blocking passage through the opening of lubricant from the bearing and foreign matter to the bearing, the seal comprising an annular seal body connected to the second member and an annular seal leg extending across the opening and sealing against the first member. Such an assembly is hereinafter referred to as of the kind described. However, in this construction, the seal leg has on its side a projecting sealing area which engages the first surface of the first member, an end of the leg engaging the second surface of the first member. Upon expulsion of lubricant, the projecting sealing area itself distorts, without significant flexure of the leg, and then passes out through apertures in the end of the leg which engages the second surface. There is therefore provided only one effective sealing point and no passage is readily provided for passage of expelled lubricant.

In accordance with the present invention, a bearing seal assembly of the kind described is characterised in that the leg has, in axial section, first, second and third sides and first and second end portions and is connected at the first end portion to the body and extends from the body across the annular opening and in a direction away from the bearing towards the first and second surfaces of the first member, the first and second sides being generally opposed, and the third side intersecting the first and second sides at the second end portion; in that first and second sealing areas are positioned on the leg at the intersection of the first and third sides and at the intersection of the second and third sides respectively, and are in sealing slidable contact with the first surface and the second surface respectively, of the first member; and in that the second side is concave to facilitate deflection of the second end portion relatively to the first end portion whereby, upon flushing of lubricant from the bearing into the annular opening, the lubricant pressure acting on the first side of the leg causes the second end portion to deflect and remove both the first and second sealing areas together from contact with the respective first and second surfaces of the first member.

With this arrangement two sealing points in series are provided and the concavity in the second side of the seal leg ensures ready flexure of the leg to provide passage of expelled lubricant past both sealing areas.

An example of a steering mechanism incorporating a seal assembly constructed in accordance with the invention, and the slightly modified form of seal assembly, are illustrated in the accompanying drawings, in which:—

FIG. 1 is a diagrammatic view of the mechanism with parts, including the seal assembly in axial section;

FIG. 2 is a section to a larger scale showing part of FIG. 1;

FIG. 3 is a section to a still larger scale showing part of FIG. 2; and,

FIG. 4 is a section corresponding to part of FIG. 2 showing a modified seal assembly.

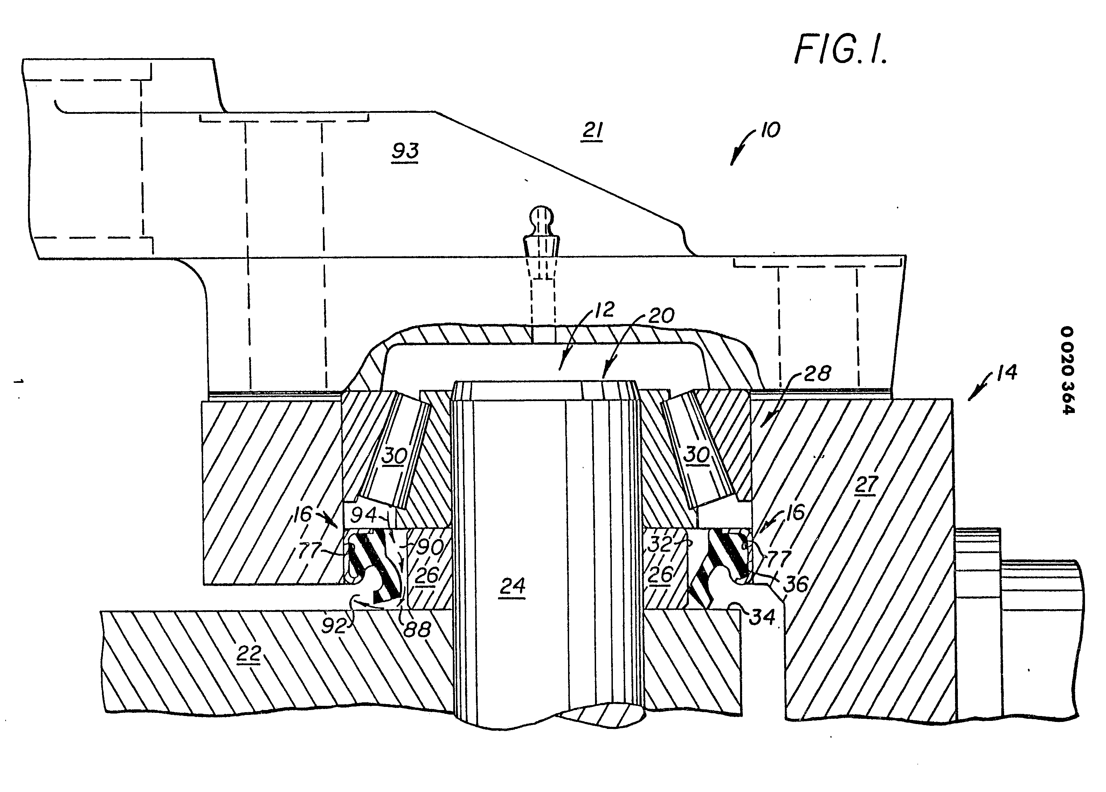

Referring to FIG. 1, a seal assembly 10 includes first and second members 12, 14 rotatable one relative to the other and a seal 16. The first member 12 is, for example, a frame portion 20 of a work vehicle 21. Said frame portion 20 includes an axle 22, king pin 24 and a spacer 26. The second member 14 is, for example, a steering knuckle 27 of the work vehicle which is positioned adjacent said frame portion 20. The steering knuckle 27 is rotatable about the fixed frame portion 20 in response to input forces exerted in steering the work vehicle 21. Means 28, shown as a bearing 30, is provided for supporting said frame portion 20 and the steering knuckle 27 in rotation one relative to the other. Such wheel steering construction is well known in the vehicle art.

The frame portion 20 has first and second surfaces 32, 34 oriented substantially perpendicular one relative to the other and defined by the spacer 26 and axle 22, respectively. The frame portion 20 and steering knuckle 27 define an annular opening 36 between said steering knuckle 27 and said first and second surfaces 32, 34. The seal 16 in the seal assembly 10 is annular in configuration and is positioned at a location sufficient for controllably sealing the passage of material through said annular opening 36 as will be hereinafter described.

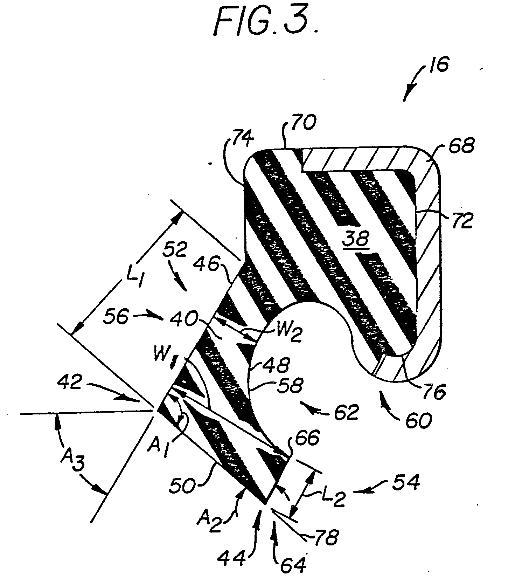

Referring particularly to FIG. 3, the seal 16 includes a body 38, a leg 40 and first and second sealing areas 42, 44. The leg 40 has first, second and third sides 46, 48, 50, first and second end portions 52, 54 and a middle portion 56. Said leg 40 is connected at the first end portion 52 to the body 38 and extends outwardly from said body 38. The first and second sides 46, 48 are generally opposed one to the other. The third side 50 intersects the first and second sides 46, 48 at the second end portion 54 preferably at respective angles $A_1$, $A_2$ of about 90°. Said seal 16 preferably has only a single leg 40 as shown.

The first and second sealing areas 42, 44 are each positioned on the leg 40 adjacent the intersection of the first and third sides 46, 50 and the intersection of the second and third sides 48, 50, respectively. Said sealing areas 42, 44 are located at or formed by the intersection of the first and third sides 46, 50 and the second and third sides 48, 50 respectively.

The second end portion 54 of the leg 40 is of a construction sufficient for being controllably deflectable relative to the first end portion 52 in response to a force exerted on at least one of the first and third sides 46, 50 of the leg 40. In the embodiment shown, the second side 48 of the leg 40, which is generally opposed to the first side 46, is of a configuration sufficient for defining a reduced cross-sectional area of said leg 40 at the middle portion 56 relative to said second end portion 54. The reduction in cross-sectional area, as further defined below by the configuration of said second side 48, provides controllable deflection of the second end portion 54 for the purposes hereinafter discussed.

The second side 48 of the leg 40 has an arcuate surface 58 extending curvilinearly inwardly on said leg 40 from the second end portion 54 toward the middle portion 56 in a direction generally toward the first side 46. The leg 40 has a width at $W_1$ defined by the distance between the first and second sides 46, 48 and the arcuate surface 58 extends inwardly at the middle portion 56 about one-half of said width (shown at $W_2$). In other words, the second side 48 extends curvilinearly inwardly and progressively reduces the cross-sectional area of the second leg 40 from the second end portion 54 toward the middle portion 56. Thus, the cross-sectional area adjacent $W_2$ is less than the cross-sectional area adjacent $W_1$. It is also desirable that said arcuate surface 58 further extend curvilinearly outwardly from the middle portion 56 toward the first end portion 52 of the leg 40 in a direction from the first side 46 and intersects the body 38 at a location 60 at which the leg 40 connects at the second side 48 to the body 38.

The second side 48 has an arcuate portion 62 defining the arcuate surface 58 of said second side 48 and a substantially linear portion 64 intersecting the third side 50 of the leg 40 and which is preferably substantially parallel to the first side 46 of said leg 40. Said linear portion 64 has a length $L_2$ about one-third the length $L_1$ of the first side 46 in order to maintain sufficient width at the second end portion 54 of the leg 40 for adequate rigidity of the seal 16 in position in the seal assembly 10 against the first and second surfaces 32, 34 of the frame portion 20. Further, the second sealing area 44 is positioned on the leg 40 at a location immediately adjacent a point 66 on the second side 48 from which the arcuate surface 58 extends inwardly toward the first side 46.

Referring to the embodiment of FIG. 4, means 63 is provided for biasing the second end portion 54 of the leg 40 relative to the first end portion 52 of said leg 40 in a direction $D_1$ from the second side 48 toward the first side 46 of the leg 40. Said biasing means 63 is shown as a spring 65, such as a helical spring, positioned on the second side 48 of the leg 40 and retained in a groove 67 formed in the arcuate portion 62 of said second side 48. In an annular configuration of the seal 16, which is the preferred embodiment, the spring 65 tends to bias radially inwardly against and about said second side 48 to urge said first and second sealing areas 42, 44 into contact with the first and second surfaces 32, 34 when the seal 16 is positioned in the seal assembly 10. Said biasing means 63 can also be, for example, a ring or similar element which tends to contract radially inwardly against the second side 48.

The body 38, leg 40 and first and second sealing areas 42, 44 are preferably of unitary, elastomeric construction. The seal 16 also has a carrier element 68 connected or molded to the body 38 on at least first and second sides 70, 72 of said body 40. The carrier element 68 is of metallic construction as is known in the art. The first and second sides 46, 48 of the leg 40 intersect third and fourth sides 74, 76 of the body 38 and define the orientation of the leg 40 relative to the body 38 as shown.

In the installed position of the seal 16 in the seal assembly 10, the seal body 38 is connected to the steering knuckle 27 and positioned adjacent and extending about the annular opening 36. In the embodiment shown, said seal 16 is press fit into a substantially circular bore 77 defined by the steering knuckle 27 owing to the oversize configuration of the metallic carrier element 68. The first sealing area 42 is positioned in sealing, slidable contact with the first surface 32 of the frame portion 20. The second sealing surface 44 is positioned in sealing slidable contact with the second surface 34 of the frame portion 20. The second end portion 54 of the leg 40 is controllably deflectable as above described with respect to the individual seal 16. The first and second sealing areas 42, 44 are thus removable from contact with the first and second surfaces 32, 34, respectively, in response to controllably deflecting the second end portion 54.

A line 78 passing between the first and second sealing areas 42, 44 intersects the first surface 32 of the frame portion 20 at an angle $A_5$ in a range of about 45° to about 90°. The third side 50 extends between said sealing areas 42, 44 and defines said line 78. The angle $A_5$ in the preferred embodiment is about 45°. In other words, said line 78 passing between the sealing areas 42, 44 defines a chord 80 of a circle 82 having a radial line 84. The radial line 84 substantially bisects the chord 80 and passes immediately adjacent the intersection 86 of first and second planes 32', 34' defined by the first and second surfaces 32, 34 of the frame portion 20. As is also shown, the first side 46 of the leg 40 intersects the first surface 32 of the frame portion 20 at an angle $A_6$ of about 30°. The linear portion 64 of the second side 48 intersects the second surface 34 of the frame portion 20 at an angle $A_7$ of about 60°.

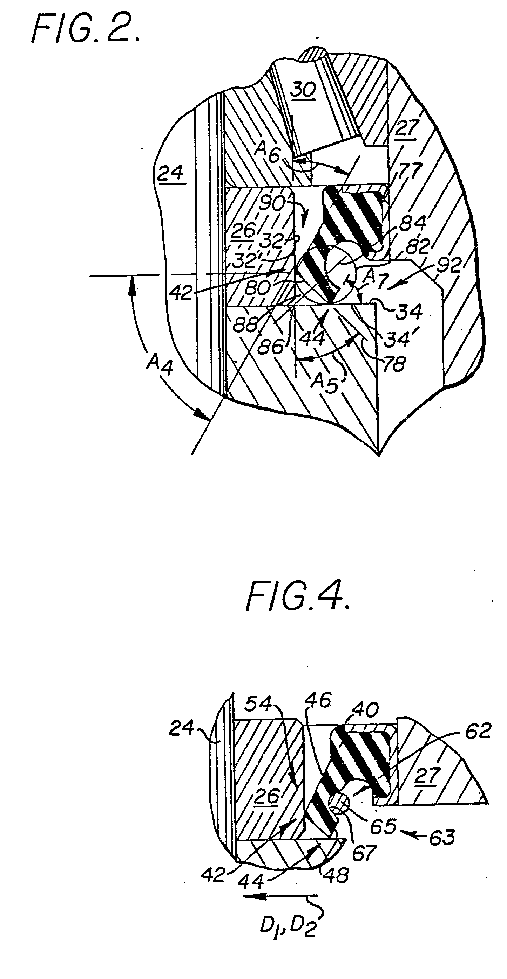

The first and second sealing areas 42, 44 urge against the first and second surfaces 32, 34 of the frame portion 20, respectively, in order to maintain a positive "seal" against said surfaces 32, 34. The biasing means 65 or spring 67 in the embodiment of FIG. 4 biases the second end portion 54 of the leg 40 relative to the first end portion 52 of the leg 40 in a direction $D_2$ toward the first surface 32 of the frame portion 20 to assure the positive "seal". Said direction $D_2$ is shown substantially the same as the direction $D_1$. The positive "seal" can also be assured by preloading the leg 40. In other words, the orientation of the first side 46 of the leg 40, as represented by angle $A_3$ (FIG. 3) can be provided in the seal 16 such that said first side 46 is displaced from said angle $A_3$ to an installation angle $A_4$ (FIG. 2) when the seal 16 is in the installed position. Thus, angle $A_3$ is provided less than angle $A_4$ to establish the preloaded condition.

On the sealed assembly 10, the leg 40 forms an annular chamber 88 with the frame portion 20. The annular chamber 88 is defined by the first and second surfaces 32, 34 of said frame portion 20 and the third side 50 of the leg 40. The leg 40 also forms first and second channels 90, 92 with said frame portion 20. Said first and second channels 90, 92 are defined by the first side 46 of the leg 40 and the first surface of the frame portion 20 and the second side 48 of the leg 40 and the second surface 34 of the frame portion 20, respectively. Said channels 90, 92 are of a construction sufficient for being positionable in communication one with the other in response to removing the first and second sealing areas 42, 44 from contact with the first and second surfaces 32, 34 respectively.

In the seal assembly 10 the second end portion 54 of the leg 40 is controllably deflectable relative to the first end portion 52 of the leg 40, as was explained previously with respect to the seal 16. Also, the configuration of said seal 16 is preferably also as above explained with respect to the seal 16. The first and second sealing areas 42, 44 are removable from contact with the first and second surfaces 32, 34 of the frame portion 20, respectively, in response to controllably deflecting said second end portion 54, as is shown by way of example in FIG. 1. The channels 90, 92 are in fluid communication one with the other in response to exerting a force on at least one of the first and third sides 46, 50 of the leg 40 for deflecting said second end portion 54.

Industrial Applicability

In the use of the seal 16 in the seal assembly 10, the first and second sealing areas 42, 44 slidably contact the first and second surfaces 32, 34 of the frame portion 20 to block passage of foreign matter through the annular opening 36 and to the bearing 30. Overfill of lubricant in the bearing 30 controllably deflects the second end portion 54 of the leg 40 to relieve lubricant through the annular opening 36 to clean the bearing 30.

For example, input forces on the steering knuckle 27 through a steering arm 93 cause said knuckle 27 to rotate relative to the frame portion 20. In rotation the first and second sealing surfaces 42, 44 wipe or slide along the frame portion 20 to prevent passage of dirt, water or the like through the annular opening 36 to the bearing 30. Thus, the bearing 30 is substantially protected from the effects of the environment of the work vehicle 21. Said sealing surfaces 42, 44 remain seated on the surfaces 32, 34 of the frame portion 20 and the second end portion 54 of the leg 40 resists deflection from forces exerted on the seal 16 by dirt or the like owing to the substantially linear configuration of the first side 46 of the leg 40 and its orientation relative to the frame portion 20.

After a period of use of the steering of the vehicle, it may be desirable to relubricate said bearing 30. The bearing 30 is commonly overfilled to permit flushing of the old lubricant from the bearing 30. As the lubricant passes through the bearing 30, it will urge initially against the first side 46 of the leg 40 and exert a force on said first side 46. Where the force is sufficient, the second end portion 54 of the leg 40 will deflect about the point of intersection of the first side 46 of the leg 40 and the body 38 owing to the curvilinear configuration of the second side 48 of the leg 40 and the corresponding reduction in cross-sectional area. Deflection of the second end portion 54 removes the sealing surfaces 42, 44 from contact with the frame portion 20. The lubricant then flows from the first channel 90 through the annular chamber 88 and out the second channel 92. This action is represented by flow lines 94 in FIG. 1.

Force is also exerted on the third side 50 of the leg 40 during overfill. This tends to promote relief or escape of the lubricant from the bearing 30. Where the first and second sealing surfaces 32, 34 urge against the frame portion 20, the relief of said lubricant tends to slow owing to the greater force required to overcome, for example, the spring 65 or preload of the leg 40. Following overfill some lubricant will be trapped in the annular chamber 88 and will act as an additional barrier to foreign matter. It should be understood that a force exerted on only the third side 50 of the leg 40 will also deflect the seal 16.

The first and second sealing areas 42, 44 are represented by points of contact such as are formed by the intersections of the first and third sides 46, 50 and second and third sides 48, 50 of the legs 40, respectively, to reduce friction between the seal 16 and frame portion 20. The first sealing area 42 will, however, tend to wear a groove into the first surface 32 during operation of the vehicle steering. The wearing action at the first sealing area 42 results in movement of the second sealing surface 34 toward the first surface 32, but does not interfere substantially with the performance of the seal 16.

The preferred orientation and configuration of the seal 16 is shown in the drawings. The third side 50 intersects the first surface 32 at the angle $A_5$ which is about 45°. The first side 46 and linear portion 64 of the second side 48 intersect the first and second surfaces 32, 34, respectively, at angles $A_6$, $A_7$ of about 30° and 60° respectively. It will be evident from a study of the drawings that other orientations or configurations of the seal 16 will to some degree lessen or increase the effect of the deflection and sealing capabilities of the seal 16. For example, a greater angle $A_5$ tends to reduce the capabilities of seal 16 to relieve the lubricant flowing through the bearing 30 owing to a reduction in the size of the relief pathway available to said lubricant.

## Claims

1. A bearing seal assembly comprising first (12) and second (14) members which are rotatably mounted relatively to one another by means of an interposed bearing (30) and which define therebetween an annular opening (36) leading from the bearing to the exterior, the opening being bounded on one side by first and second annular surfaces (32, 34) of the first member with the first surface (32) extending away from the bearing and the second surface (34) extending from the end of the first surface remote from the bearing substantially perpendicular to the first surface so as to face towards the bearing; and an annular seal (16) in the opening for blocking passage through the opening of lubricant from the bearing and foreign matter to the bearing, the seal comprising an annular seal body (38) connected to the second member (14) and an annular seal leg (40) extending across the opening and sealing against the first member; characterised in that the leg (40) has, in axial section, first, second and third sides (46, 48, 50) and first and second end portions (52, 54) and is connected at the first end portion (52) to the body (38) and extends from the body (38) across the annular opening (36) and in a direction away from the bearing (30) towards the first and second surfaces (32, 34) of the first member (14), the first and second sides (46, 48) being generally opposed, and the third side (50) intersecting the first and second sides (46, 48) at the second end portion (54); in that first and second sealing areas (42, 44) are positioned on the leg (40) at the intersection of the first and third sides (46, 48) and at the intersection of the second and third sides (48, 50) respectively, and are in sealing, slidable contact with the first surface (32) and the second surface (34) respectively, of the first member (12); and in that the second side (48) is concave to facilitate deflection of the second end portion (54) relatively to the first end portion (52) whereby, upon flushing of lubricant from the bearing into the annular opening, the lubricant pressure acting on the first side (46) of the leg causes the second end portion (54) to deflect and remove both the first and second sealing areas (42, 44) together from contact with the respective first and second surfaces (32, 34) of the first member (14).

2. An assembly according to claim 1, wherein, in axial section, the first side (46) is substantially linear.

3. An assembly according to claim 1 or claim 2, wherein, in axial section, the second side (48) has a substantially linear portion (64) intersecting the third side, and an arcuate portion (62) defining the concavity of the second side.

4. An assembly according to claims 2 and 3, wherein the length ($L_2$) of the linear portion (64) of the second side (48) is substantially one third the length ($L_1$) of the first side (46).

5. An assembly according to claims 2 and 3, or to claim 4, wherein the first side (46) is substantially parallel to the linear portion (64) of the second side (48).

6. An assembly according to any one of the preceding claims, wherein, in axial section, the third side (50) is substantially linear.

7. An assembly according to claims 5 and 6, wherein the third side (50) intersects the first side (46) at substantially 90°.

8. An assembly according to any one of the preceding claims, wherein the leg (40) has, at the second end portion, a width $(W_1)$ between the first and second sides (46, 48), and the arcuate surface (58) defining the concavity of the second side (48) extends inwardly about one half of the width $(W_1)$.

9. An assembly according to any one of the preceding claims, wherein the body (38), leg (40) and first and second sealing areas (42, 44) are of unitary, elastomeric construction.

10. An assembly according to any one of the preceding claims, including means (63) for biasing the second end portion (54) of the leg (40) relatively to the first end portion (52) of the leg (40) in a direction $(D_1)$ to urge the first and second sealing areas (42, 44) into contact with the respective first and second surfaces (32, 34) of the first member (14).

11. An assembly according to claim 10, wherein the first surface (32) of the first member (14) faces radially outwardly and the biasing means comprises a spring urging the leg (40) radially inwardly.

12. An assembly according to claim 11, wherein the spring is an annular spring located in the concavity in the second side (48).

Patentansprüche

1. Eine Lagerdichtanordnung, welche folgendes aufweist: erste (12) und zweite (14) Glieder, die drehbar bezüglich einander mittels eines dazwischen angeordneten Lagers (30) angeordnet sind und die dazwischen eine vom Lager nach außen führende Ringöffnung (36) bilden, die auf einer Seite durch erste und zweite Ringoberflächen (32, 34) des ersten Glieds begrenzt ist, wobei sich die erste Oberfläche (32) vom Lager wegerstreckt, und die zweite Oberfläche (34) sich vom Ende der ersten Oberfläche entfernt vom Lager im wesentlichen senkrecht zur ersten Oberfläche erstreckt, um so auf das Lager hinzuweisen, und eine Ringdichtung (16) in der Öffnung, um den Durchlaß von Schmiermittel vom Lager und von Fremdmaterial zum Lager durch die Öffnung zu blockieren, wobei die Dichtung einen mit dem zweiten Glied (14) verbundenen ringförmigen Dichtungskörper (38) und einen ringförmigen Dichtungsschenkel (40) aufweist, der sich über die Öffnung erstreckt und gegenüber dem ersten Glied abdichtet, dadurch gekennzeichnet, daß der Schenkel (40) im Axialschnitt erste, zweite und dritte Seiten (46, 48, 50) und erste und zweite Endteile (52, 54) aufweist und am ersten Endteil (52) mit dem Körper (38) verbunden ist und sich vom Körper (38) über die Ringöffnung (36) erstreckt, und zwar in einer Richtung vom Lager (30) weg zu den ersten und zweiten Oberflächen (32, 34) des ersten Glieds (14) hin, und wobei die ersten und zweiten Seiten (46, 48) im allgemeinen entgegengesetzt angeordnet sind, und wobei ferner die dritte Seite (50) die ersten und zweiten Seiten (46, 48) am zweiten Endteil (54) schneidet, und weiterhin gekennzeichnet dadurch, daß erste und zweite Abdichtgebiete (42, 44) auf dem Schenkel (40) am Schnitt der ersten und dritten Seiten (46 und 48) bzw. am Schnitt der zweiten und dritten Seiten (48, 50) positioniert sind und in abdichtendem, gleitendem Kontakt mit der ersten Oberfläche (32) bzw. der zweiten Oberfläche (34) des ersten Glieds (12) stehen, und ferner dadurch gekennzeichnet, daß die zweite Seite (48) konkav ist, um die Auslenkung des zweiten Endteils (54) bezüglich des ersten Endteils (52) zu erleichtern, wodurch beim Spülen des Schmiermittels aus dem Lager in die Ringöffnung der auf die erste Seite (46) des Schenkels wirkende Schmiermitteldruck die Auslenkung des zweiten Endteils (54) bewirkt und sowohl die ersten als auch zweiten Dichtgebiete (42, 44) zusammen vom Kontakt mit den entsprechenden ersten und zweiten Oberflächen (32, 34) des ersten Glieds (14) entfernt.

2. Anordnung nach Anspruch 1, wobei im Axialschnitt die erste Seite (46) im wesentlichen linear ist.

3. Anordnung nach Anspruch 1 oder 2, wobei im Axialschnitt die zweite Seite (48) einen im wesentlichen linearen Teil (64) aufweist, der die dritte Seite schneidet, und einen bogenförmigen Teil (62), der die Konkavität der zweiten Seite definiert.

4. Anordnung nach Anspruch 2 und 3, wobei die Länge $(L_2)$ des Linearteils (64) der zweiten Seite (48) im wesentlichen ein Drittel der Länge $(L_1)$ der ersten Seite (46) ist.

5. Anordnung nach Anspruch 2 und 3 oder nach Anspruch 4, wobei die erste Seite (46) im wesentlichen parallel zum Linearteil (64) der zweiten Seite (48) verläuft.

6. Anordnung nach einem der vorhergehenden Ansprüche, wobei im Axialschnitt die dritte Seite (50) im wesentlichen linear ist.

7. Anordnung nach Anspruch 5 und 6, wobei die dritte Seite (50) die erste Seite (46) unter im wesentlichen 90° schneidet.

8. Anordnung nach einem der vorhergehenden Ansprüche, wobei der Schenkel (40) am zweiten Endteil eine Breite $(W_1)$ zwischen den ersten und zweiten Seiten (46, 48) aufweist, und wobei die die Konkavität der zweiten Seite (48) definierende bogenförmige Oberfläche (58) sich nach innen um ungefähr die Hälfte der Breite $(W_1)$ erstreckt.

9. Anordnung nach einem der vorhergehenden Ansprüche, wobei der Körper (38), Schenkel (40) und die ersten und zweiten Abdichtgebiete (42, 44) von einheitlichem Elastomeraufbau sind.

10. Anordnung nach einem der vorhergehenden Ansprüche, mit Mitteln (63) zum Vorspannen des zweiten Endteils (54) des Schenkels (40) bezüglich des ersten Endteils (52) des Schenkels (40) in einer Richtung (D₁), um die ersten und zweiten Dichtungsgebiete (42, 44) in Kontakt mit den entsprechenden ersten und zweiten Oberflächen (32, 34) des ersten Glieds (14) zu drücken.

11. Anordnung nach Anspruch 10, wobei die erste Oberfläche (32) des ersten Glieds (14) radial nach außen weist und die Vorspannmittel eine den Schenkel (40) radial nach innen drückende Feder aufweisen.

12. Anordnung nach Anspruch 11, wobei die Feder eine ringförmige Feder ist, die in der Konkavität in der zweiten Seite (48) angeordnet ist.

## Revendications

1. Dispositif d'étanchéité pour palier ou roulement comprenant un premier et un second éléments (12, 14) qui sont montés à rotation l'un par rapport à l'autre au moyen d'un palier ou d'un roulement (30) interposé entre eux et qui délimitent entre eux une ouverture annulaire (36) allant du palier à l'extérieur, cette ouverture étant limitée d'un côté, par une première et une seconde surfaces annulaires (32, 34) du premier élément, la première surface (32) s'éloignant du palier tandis que la seconde surface (34) s'étend de l'extrémité de la première surface qui est à l'opposé du palier, suivant une direction pratiquement perpendiculaire à la première surface de façon à être orientée vers le palier; et un joint d'étanchéité annulaire (16) logé dans l'ouverture pour interdire le passage par cette ouverture du lubrifiant provenant du palier et des matières étrangères susceptibles d'aller vers ce dernier, le joint comprenant un corps d'étanchéité annulaire (38) relié au second élément (14) et une jambe d'étanchéité annulaire (40) s'étendant en travers de l'ouverture et venant s'appliquer de manière étanche contre le premier élément, caractérisé en ce que la jambe (40) présente, en coupe axiale, un premier, un second et un troisième côtés (46, 48, 50) et une première et une seconde parties d'extrémité (52, 54) et est reliée par la première partie d'extrémité (52) au corps (38) et s'étend de ce corps (38) à travers l'ouverture annulaire (36) et suivant une direction orientée à l'opposé du palier ou du roulement (30), vers la première et seconde surfaces (32, 34) du premier élément (14), le premier et le second côtés (46, 48) étant pratiquement opposés, tandis que le troisième côté (50) coupe le premier et le second côtés (46, 48) à la seconde partie d'extrémité (54); en ce que la première et la seconde zones d'étanchéité (42, 44) sont placées sur la jambe (40), respectivement à l'intersection du premier et du troisième côtés (46, 48) et à l'intersection du second et du troisième côtés (48, 50), et sont en contact à glissement et de manière étanche, respectivement avec la première surface (32) et la seconde surface (34) du premier élément (12); et en ce que le second côté (48) est concave afin de faciliter la flexion de la second partie d'extrémité (54) par rapport à la première (52), ce qui fait que quand le lubrifiant s'écoule du palier ou du roulement dans l'ouverture annulaire, la pression du lubrifiant agissant sur le premier côté (46) de la jambe provoque une flexion de la seconde partie (54) et écarte la première et la seconde zones d'étanchéité (42, 44) respectivement de la première et de la seconde surfaces (32, 34) du premier élément (14).

2. Dispositif d'étanchéité selon la revendication 1, dans lequel en coupe axiale, le premier côté (46) est pratiquement rectiligne.

3. Dispositif d'étanchéité selon la revendication 1 ou 2, dans lequel, en coupe axiale, le second côté (48) possède une partie (64) pratiquement rectiligne coupant le troisième côté, et une partie arquée (62) définissant la concavité du second côté.

4. Dispositif d'étanchéité selon les revendications 2 et 3, dans lequel la longueur ($L_2$) de la partie rectiligne (64) du second côté (48) est pratiquement le tiers de la longueur ($L_1$) du premier côté (46).

5. Dispositif d'étanchéité selon les revendications 2 et 3 ou selon la revendication 4, dans lequel le premier côté (46) est pratiquement parallèle à la partie rectiligne (64) du second côté (48).

6. Dispositif d'étanchéité selon l'une quelconque des revendications précédentes, dans lequel, en coupe axiale, le troisième côté (50) est pratiquement rectiligne.

7. Dispositif d'étanchéité selon les revendications 5 et 6, dans lequel le troisième côté (50) coupe le premier côté (46) suivant un angle d'environ 90°.

8. Dispositif d'étanchéité selon l'une quelconque des revendications précédentes, dans lequel la jambe (40) présente, à la seconde partie d'extrémité, une largeur ($W_1$) entre le premier et le second côtés (46, 48), tandis que la surface arquée (58) qui délimite la cavité du second côté (48) s'étend vers l'intérieur sur la moitié environ de la largeur ($W_1$).

9. Dispositif d'étanchéité selon l'une quelconque des revendications précédentes, dans lequel le corps (38), la jambe (40) et la première et la seconde zones d'étanchéité (42, 44) sont realisées d'une seule pièce en élastomère.

10. Dispositif selon l'une quelconque des revendications précédentes, comprenant des moyens (63) pour solliciter la seconde partie d'extrémité (54) de la jambe (40) par rapport à la première partie d'extrémité (52) de cette jambe (40), dans une direction (D₁) afin d'amener les deux zones d'étanchéité (42, 44) en contact respectivement avec la première et la seconde surfaces (32, 34) du premier élément (14).

11. Dispositif selon la revendication 10, dans lequel la première surface (32) du premier élément (14) est orientée radialement vers l'extérieur et les moyens de sollicitation sont constitués par un ressort qui sollicite la jambe (40) radialement vers l'intérieur.

12. Dispositif selon la revendication 11, dans lequel le ressort est un ressort annulaire logé dans la concavité du second côté (48).

FIG.1.

FIG. 2.

FIG. 4.

**0 020 364**

FIG. 3.